**Europäisches Patentamt**

**European Patent Office**

**Office européen des brevets**

(11) Numéro de publication: **0 121 510**

**A2**

(12) # DEMANDE DE BREVET EUROPEEN

(21) Numéro de dépôt: **84870042.3**

(22) Date de dépôt: **22.03.84**

(51) Int. Cl.³: **E 04 C 5/16**
**E 04 F 19/00**

(30) Priorité: **28.03.83 BE 210408**
**21.11.83 BE 211901**

(43) Date de publication de la demande:
**10.10.84 Bulletin 84/41**

(84) Etats contractants désignés:
**AT BE CH DE FR GB IT LI LU NL SE**

(71) Demandeur: **Meyers, Claude**
**rue Laneau 91**
**B-1020 Bruxelles(BE)**

(72) Inventeur: **Meyers, Claude**
**rue Laneau 91**
**B-1020 Bruxelles(BE)**

(74) Mandataire: **De Brabanter, Maurice**
**Bureau VANDER HAEGHEN 63 Avenue de la Toison d'Or**
**B-1060 Bruxelles(BE)**

(54) **Boîte d'ancrage pour barres à béton.**

(57) Pour assembler aux barres d'ancrage (1) laissées en attente d'une première partie d'un ouvrage (3), les barres (19) d'une armature de renforcement d'une seconde partie de l'ouvrage, on utilise un manchon d'accouplement (4) que l'on engage et fixe dans un profil (10) ayant une section trapézoïdale.

FIG. 2

La présente invention est relative à un procédé pour fixer à une paroi intérieure d'un coffrage, une barre d'ancrage appartenant à une armature de renforcement d'une première partie d'un ouvrage en béton, laissée en attente en vue d'y accrocher, dans une phase ultérieure, une barre d'ancrage d'une armature de renforcement d'une seconde partie de l'ouvrage.

Elle trouve sa principale application en génie civil dans la construction d'ouvrages en béton armé réalisés en diverses étapes successives.

On connaît des éléments d'attente constitués de boîtiers en matière synthétique ou métal, que l'on fixe à l'aide de clous sur les parois intérieures d'un coffrage. Dans ces boîtiers sont introduites, repliées et fixées, des barres d'attente. Après décoffrage de la partie correspondante de l'ouvrage, les barres d'attente sont dépliées et reliées individuellement à des barres d'ancrage d'une armature de renforcement d'une phase ultérieure de l'ouvrage.

En fait, selon les procédés connus, seules les barres de faible diamètre peuvent être traitées au moyen de boîtes d'attente. Les barres d'attente de gros diamètre doivent soit traverser le coffrage, soit être munies de manchons d'accouplement vissés, pressés ou forgés. Ces manchons doivent être fixés individuellement. Malgré la difficulté, ils doivent être positionnés avec précision sur la paroi. Après décoffrage du béton, les manchons n'occupent que rarement leur place d'origine.

La présente invention visé à remédier aux inconvénients susdits. Elle propose un procédé et une cornière qui facilite le positionnement exact et la fixation des barres d'ancrage, quels que soient leurs diamètres. Elle concerne un procédé pour fixer à une paroi intérieure d'un coffrage, une barre d'ancrage appartenant à une armature de renforcement d'une première partie d'un ouvrage en béton, laissée en attente en vue d'y accrocher, dans une phase ultérieure, une barre d'ancrage d'une armature de renforcement d'une seconde partie de l'ouvrage, ce procédé étant essentiellement caractérisé en ce qu'on assemble à l'extrémité d'un étrier ou d'une barre d'ancrage, un manchon d'accouplement muni d'un filet intérieur et d'une saillie extérieure et en ce qu'on fixe ledit manchon en introduisant ladite saillie dans un orifice d'un profil ayant une section en forme de trapèze. Ce profil de grande ou petite longueur, léger et facile à manipuler, se cloue en premier lieu au coffrage. L'insertion de manchons se faisant par la suite. Les profils métalliques peuvent également se ligaturer ou se souder aux armatures principales.

Dans une forme de réalisation différente, on fixe le manchon d'accouplement (de n'importe quelle provenance), au premier profil susdit, à l'aide d'une pièce intermédiaire présentant une extrémité filetée que l'on engage dans le manchon, cette pièce étant également munie d'une tête pourvue de deux ergots diamétralement opposés l'un à l'autre et destinés à être introduits dans deux évidements correspondants ménagés à la périphérie des orifices dudit profil, afin de fixer ladite pièce au profil par rotation d'au moins une fraction de tour.

Elle concerne également une pièce support pliée en queue d'aronde, destinée à fixer des manchons d'accouplement décrits ci-dessous, essentiellement caractérisé en ce qu'elle est pourvue d'orifices présentant une ébauche de filet intérieur hélicoïdal.

Elle concerne enfin un manchon d'accouplement comportant au moins une saillie extérieure.

Dans une forme de réalisation particulière, le manchon comporte un filet extérieur et un filet intérieur, lequel est éventuellement métrique et interrompu en son milieu par une plage non filetée.

D'autres détails et particularités de l'invention ressortiront de la description détaillée suivante, ainsi que des dessins annexés au présent mémoire, qui représen - tent à titre illustratif et non limitatif, une forme de réalisation de la présente invention.
Dans ces dessins :
- La figure 1 est une vue en plan d'un coffrage dont une paroi verticale est munie d'une cornière d'ancrage;

- la figure 2 est une vue en perspective d'un profil portant un manchon d'accouplement;

- la figure 3 est une vue en perspective d'un profil exempt de manchon d'accouplement;

- la figure 4 est une vue en plan de la jonction de deux parties d'ouvrage à l'aide d'un profil en forme de queue d'aronde;

- la figure 5 illustre la mise en place de barres de recouvrement soudées l'une à l'autre;

- les figures 6 et 7 montrent une pièce filetée munie d'une tête portant deux ergots susceptible de fixer des manchons d'accouplement de types divers.

Dans ces figures, les mêmes notations de référence désignent des éléments identiques ou analogues.

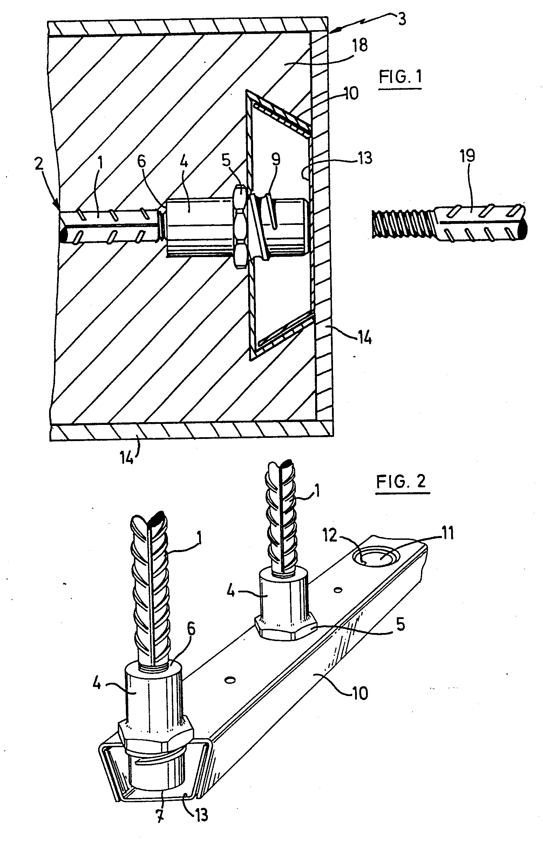

Comme illustré à la figure 1, une barre d'ancrage 1 appartenant à une armature de renforcement 2 d'une première partie d'un ouvrage de béton désignée dans son ensemble par la notation de référence 3, est laissée en attente en vue d'y accrocher, dans une phase ultérieure, par l'intermédiaire d'un manchon d'accouplement 4, une barre d'ancrage non montrée, d'une armature de renforcement d'une seconde partie non montrée de l'ouvrage.

Le manchon d'accouplement 4 est constitué d'un fourreau cylindrique dont la surface extérieure est munie d'une embase 5 hexagonale et dont la paroi intérieure est munie d'un filet intérieur 6 éventuellement métrique, interrompu en son milieu par une plage médiane non filetée 7. La plage médiane non filetée 7 permet de positionner correctement la barre 1 dans le manchon 4 et d'obtenir à l'aide d'une clé dynamométrique non montrée, un serrage optimal de l'ancrage. L'assemblage du manchon et de la barre d'ancrage se fait généralement en usine, afin d'assurer le couple de serrage prescrit. L'entrée encore libre du manchon 4 est obturée temporairement par un bouchon 8.

Suivant une particularité de l'invention, le manchon 4 est muni d'une saillie constituée dans une première forme de réalisation, par un filet extérieur 9 à pas large permettant de les visser en 3/4 de tour sur l'âme d'un profil 10 de section trapézoïdale, dans lequel sont ménagés des orifices 11 pourvus d'ébauches de filet emboutis 12. Cette simple rotation de 180 à 270 degrés, permet d'éviter l'enchevêtrement des divers crochets et étriers.

Les manchons 4 peuvent également être soudés, fixés par clip ou sertis dans les orifices 11 dudit profil.

On fixe le profil 10 de section trapézoïdale, à la paroi du mur, en le faisant coulisser le long d'un second profil 13 en forme de queue d'aronde cloué préalablement sur la paroi intérieure d'un coffrage 14. L'ensemble des deux profils 10, 13 forme une boîte hermétique qui ménage une mortaise 15 dans la première partie de l'ouvrage et un tenon 16 dans une seconde partie 17 de l'ouvrage. Cette boîte permet d'encastrer partiellement chacun des manchons 4 dans les deux parties 3, 17 de l'ouvrage.

Les efforts de cisaillement provoqués par un glissement relatif des deux parties d'ancrage le long de l'assemblage en queue d'aronde sont repris par les manchons 4 et non plus par les barres d'ancrage 1 qui n'offrent en fait qu'un diamètre plus faible.

Après un bétonnage et durcissement du béton 18 dans la première partie 3 de l'ancrage, on retire le coffrage 14 et on arrache le second profil 13 du premier profil 10 restant encastré dans le béton.

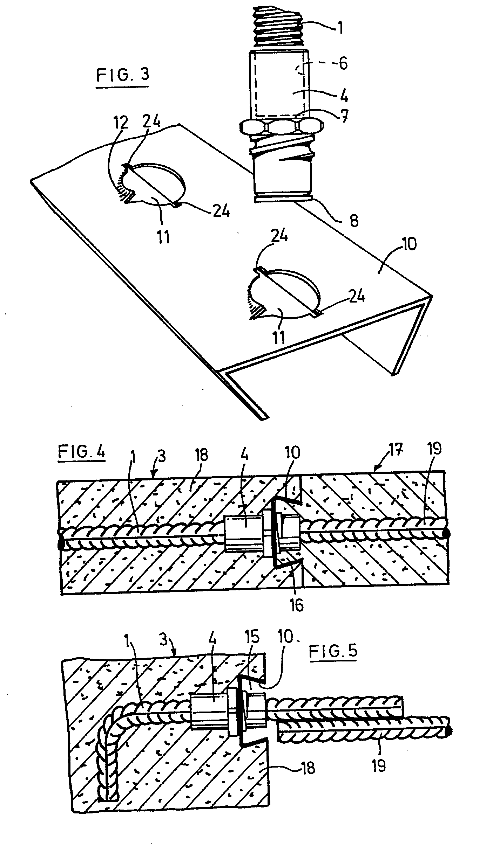

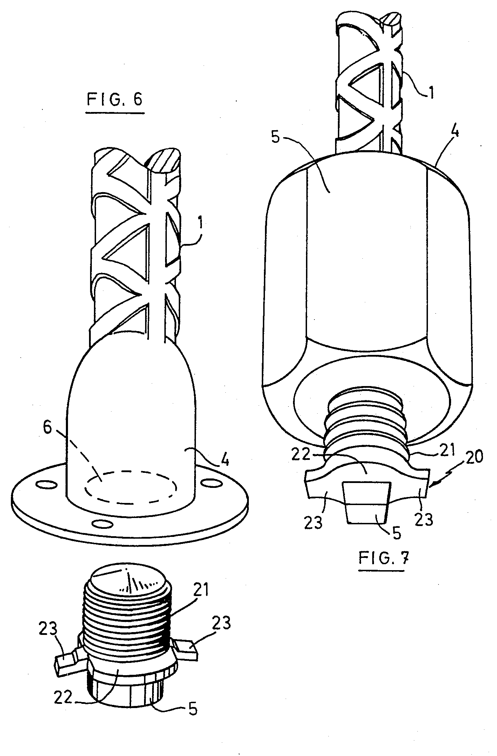

On accède ainsi aux manchons 4 qui restent soigneusement alignés au fond de la mortaise 15. On assemble les barres de recouvrement 19 aux manchons à l'aide d'une clé dynamométrique. (Figures 4 et 5).

L'assemblage tenon-mortaise 15, 16, outre deux parties successives de l'ancrage assure une reprise des efforts et augmente considérablement l'adhérence et l'étanchéité.

Comme montré par les figures 6 et 7, on peut également fixer sur le profil 10, les manchons d'accouplement d'origines diverses, même si ceux-ci ne sont pas pourvus d'un filet extérieur 9. Il suffit d'utiliser une pièce intermédiaire 20, présentant une extrémité filetée 21 et une tête 22, munie de deux ergots 23 que l'on engage dans des évidements correspondants 24 des orifices 11 du profil 10.

Il est évident que l'invention n'est pas limitée à la forme de réalisation ni aux détails décrits ci-dessus et que l'on peut apporter de nombreuses modifications à ces détails sans pour autant sortir du cadre de l'invention.

Ainsi le manchon d'accouplement 4 peut être fixé par sertissage ou soudure sur leur profil de section trapézoïdale, au lieu d'être vissé par rotation de 180° dans un filet embouti.

REVENDICATIONS

1. Procédé pour fixer à une paroi intérieure d'un coffrage, une barre d'ancrage appartenant à une armature de renforcement d'une première partie d'un ouvrage en béton, laissée en attente en vue d'y accrocher, dans une phase ultérieure, une barre d'ancrage d'une armature de renforcement d'une seconde partie de l'ouvrage, caractérisé en ce qu'on assemble à l'extrémité d'un étrier ou d'une barre d'ancrage (1), un manchon d'accouplement (4) éventuellement muni d'un filet intérieur (6) et d'une saillie extérieure (9) et en ce qu'on fixe ledit manchon (4), en introduisant ladite saillie (9) dans un orifice (11) d'un profil (10) ayant une section en forme de trapèze, que l'on attache à la paroi intérieure du coffrage (14) susdit de manière à former un évidement (15) dans le béton (18).

2. Procédé suivant la revendication 1, caractérisé en ce qu'on fixe le manchon d'accouplement (4) muni extérieurement de saillies ou d'un filet extérieur, au premier profil susdit par vissage en imprimant une rotation d'au moins une fraction de tour, de préférence 3/4 de tour.

3. Procédé suivant l'une quelconque des revendications 1 et 2, caractérisé en ce qu'on fixe le manchon d'accouplement (4) au premier profil susdit (10), à l'aide d'une pièce intermédiaire (20) présentant une extrémité filetée (21) que l'on engage dans le manchon (4), cette pièce étant également munie d'une tête (22) pourvue de deux ergots (23), diamétralement opposés l'un à l'autre et destinés à être introduits dans deux évidements correspondants ménagés à la périphérie des orifices (11)

0121510

dudit profil (10) afin de fixer ladite pièce au profil (10) par rotation d'au moins une fraction de tour.

4. Procédé suivant l'une quelconque des revendications précédentes, caractérisé en ce qu'on emboîte le profil susdit dans un second profil en forme de queue d'aronde, de manière à former une boîte hermétique.

5. Pièce support en tôle d'acier pliée de manière à présenter une section en forme de trapèze, destinée à fixer des manchons d'accouplement selon l'une quelconque des revendications précédentes, caractérisé en ce qu'elle est pourvue d'orifices présentant une ébauche de filet intérieur hélicoïdal.

6. Pièce-support selon la revendication 5, caractérisée en ce que la pièce-support est en tôle d'acier pliée.

7. Pièce-support selon la revendication 5, caractérisée en ce que lesdits orifices présentent un filet intérieur obtenu par emboutissage de la pièce profilée susdite.

8. Manchon d'accouplement à fixer selon l'une quelconque des revendications précédentes, caractérisé en ce qu'il comporte au moins une saillie extérieure.

9. Manchon selon la revendication 8, caractérisé en ce qu'il comporte un filet extérieur.

FIG. 1

FIG. 2

FIG. 3

FIG. 4

FIG. 5

FIG. 6

FIG. 7